# EUROPEAN PATENT SPECIFICATION

(11) **EP 4 250 224 B1**
(45) Date of publication and mention of the grant of the patent: **09.04.2025**
(21) Application number: 23154998.1
(22) Date of filing: 03.02.2023
(51) Int. Cl.: G06T 7/00, G06T 5/50

(54) **METHOD OF CORRECTING IMAGE, METHOD OF DETECTING ABNORMALITY, IMAGE CORRECTING APPARATUS, AND ABNORMALITY DETECTING APPARATUS**
VERFAHREN ZUR BILDKORREKTUR, VERFAHREN ZUR ERKENNUNG VON ANOMALIEN, BILDKORREKTURVORRICHTUNG UND VORRICHTUNG ZUR ERKENNUNG VON ANOMALIEN
PROCÉDÉ DE CORRECTION D'IMAGE, PROCÉDÉ DE DÉTECTION D'ANOMALIE, APPAREIL DE CORRECTION D'IMAGE ET APPAREIL DE DÉTECTION D'ANOMALIE

(30) Priority: 25.03.2022 JP 2022049551
(43) Date of publication of application: 27.09.2023
(73) Proprietor: Primetals Technologies Japan, Ltd., Hiroshima-shi, Hiroshima 733-8553 (JP)
(72) Inventor: MOCHIZUKI, Chitoshi, Hiroshima, 733-8553 (JP); KANEMORI, Shinya, Tokyo, 100-8332 (JP)
(74) Representative: Strehl & Partner mbB

(56) References cited:
- JP-B1- 7 025 608
- US-A1- 2016 314 575
- ANONYMOUS: "Normalizing intensity for each channel in a stack - Image Analysis - Image.sc Forum", August 2018 (2018-08-01), XP093033941, Retrieved from the Internet <URL:https://forum.image.sc/t/normalizing-intensity-for-each-channel-in-a-stack/19153> [retrieved on 20230322]

## Description

### BACKGROUND OF THE INVENTION

### 1. Field of the Invention

The present invention relates to a method of correcting an image, a method of detecting an abnormality, an image correcting apparatus, and an abnormality detecting apparatus.

### 2. Description of the Related Art

JP-1994-167576-A discloses, as an example of the technology for reliably detecting an interleaving paper attached to a strip on a strip processing line, a method of detecting an interleaving paper attached to a strip when the strip is delivered to a processing line, by optically detecting color components of the strip and detecting the interleaving paper on the basis of the ratio between color components of detection light and the ratio between color components of a reference color. JP 7 025608 B1 discloses a technology for detecting an abnormality of a rolled metal strip from a histogram of the luminance in an image of the steel strip.

### SUMMARY OF THE INVENTION

On rolling lines, it is common practice to monitor an image of the surface of a strip and determine an abnormality of the strip if a signal in excess of a certain threshold value is detected. One example of such technology is disclosed in JP-1994-167576-A referred to above.

Further, when the colors of steel strips are read, the steel strips give rise to different ratios of color components even if the steel strips belong to the same kind because of strip shapes and pass line fluctuations acting as disturbances. Accordingly, JP-1994-167576-A also discloses sampling color component signals several tens of times while the steel strips are traveling and reading average values of the sampled color signals for the respective colors as representative values of a reference color in order to correct the differences, caused by the disturbances, between the ratios between the color components.

Depending on illuminating conditions, the lightness of captured images varies from image to image. When the lightness varies, the values of luminance, i.e., R, G, and B values, also vary even if the images are captured of the same subject. Depending on conditions in which a camera captures images, not only the lightness of the images, but also the values of luminance, i.e., R, G, and B values, vary.

According to the related art referred to above, since nothing is considered about resetting the representative values of a reference color depending on the lightness of images, the accuracy of image processing remains to be improved.

### SUMMARY OF THE INVENTION

It is an object of the present invention to provide a method of correcting an image, a method of detecting an abnormality, an image correcting apparatus, and an abnormality detecting apparatus which are capable of increasing the accuracy of abnormality detection in image processing for metal strips even if illuminating conditions and conditions in which a camera captures images are different.

This object is solved by a method and an apparatus as set forth in the appended claims.

### BRIEF DESCRIPTION OF THE DRAWINGS

FIG. 1 is a schematic view illustrating a general makeup of rolling equipment including an image correcting apparatus and an abnormality detecting apparatus according to an embodiment of the present invention;
FIGS. 2A and 2B are diagrams illustrating an example of a first image of FIG. 2A and a second image of FIG. 2B, respectively, that have been captured of a metal strip as it is rolled in the rolling equipment, indicating the difference between color tones of the metal strip;
FIG. 3 is a diagram illustrating the state of the luminance of an R value, a G value, or a B value in the rolling direction of an image captured of the surface of the metal strip;

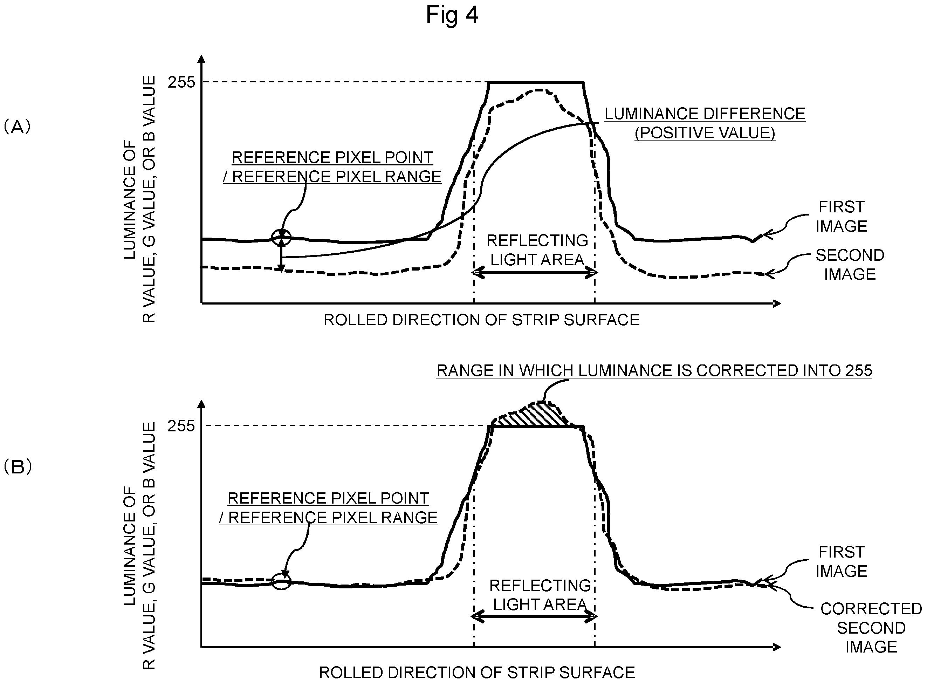

FIGS. 4A and 4B are diagrams illustrating an example of the correction of the luminance of the R value, the G value, or the B value in the rolling direction of images captured of the metal strip, FIG. 4A illustrating a luminance distribution of the R values, the G values, or the B values in the rolling direction of the first image and the second image in the case where the luminance difference produced by subtracting the luminance of the second image from the luminance of the first image at a reference pixel point is of a positive value, FIG. 4B illustrating a luminance distribution of the R values, the G values, or the B values in the rolling direction of the first image and the second image that has been corrected;

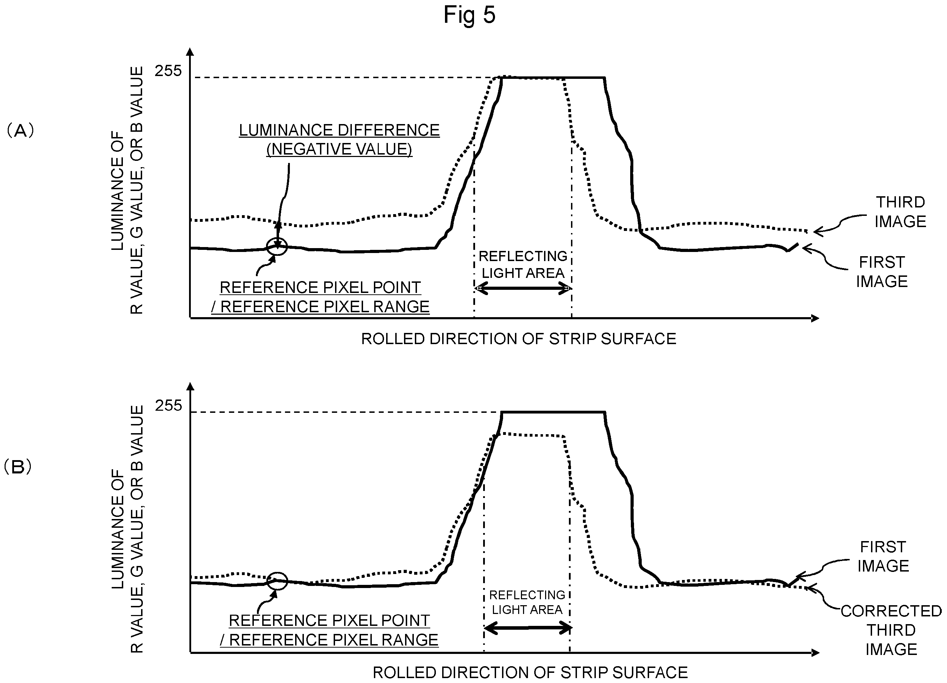

FIGS. 5A and 5B are diagrams illustrating an example of the correction of the luminance of the R value, the G value, or the B value in the rolling direction of images captured of the metal strip, FIG. 5A illustrating a luminance distribution of the R values, the G values, or the B values in the rolling direction of the first image and a third image in the case where the luminance difference produced by subtracting the luminance of the third image from the luminance of the first image at a reference pixel point is of a negative value, FIG. 5B illustrating a luminance distribution of the R values, the G values, or the B values in the rolling direction of the first image and the third image that has been corrected;
FIG. 6 is a diagram illustrating the R value, the G value, and the B value at point B in FIGS. 2A and 2B of images captured of the metal strip;
FIG. 7 is a diagram illustrating the luminance differences between the R value, the G value, and the B value of images captured of the metal strip and the R value, the G value, and the B value of an image No. 8 in FIG. 6;
FIG. 8 is a diagram illustrating the R value, the G value, and the B value at point D in FIGS. 2A and 2B of images captured of the metal strip;
FIG. 9 is a diagram illustrating the luminance differences between the R value, the G value, and the B value of images captured of the metal strip and the R value, the G value, and the B value of an image No. 8 in FIG. 8;
FIG. 10 is a diagram illustrating an example of histograms of luminance, i.e., the R value, the G value, and the B value, at pixel points in a strip range in an image in the abnormality detecting apparatus according to the embodiment;
FIG. 11 is a diagram of a histogram of luminance, illustrating an example of a method of calculating a luminance reference value, i.e., the R value, in the abnormality detecting apparatus according to the embodiment;
FIG. 12 is a diagram of a histogram of luminance and an integrated value sum ratio of a frequency distribution thereof, illustrating another example of a method of calculating a luminance reference value, i.e., the R value, in the abnormality detecting apparatus according to the embodiment; and
FIG. 13 is a diagram of a histogram of luminance and an integrated value sum ratio of a frequency distribution thereof, illustrating still another example of a method of calculating a luminance reference value, i.e., the R value, in the abnormality detecting apparatus according to the embodiment.

### DESCRIPTION OF THE PREFERRED EMBODIMENTS

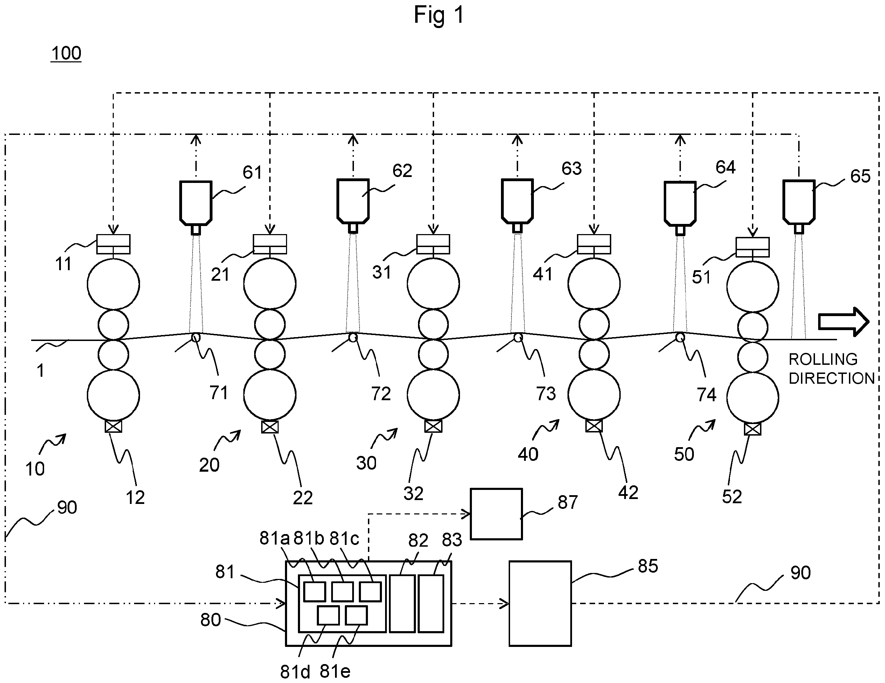

A method of correcting an image, a method of detecting an abnormality, an image correcting apparatus, and an abnormality detecting apparatus according to a preferred embodiment of the present invention will be described below with reference to FIGS. 1 through 12. Those components illustrated in the drawings that are identical or correspond to each other are denoted by identical or similar reference characters and their repetitive description may be omitted.

First, an overall makeup of rolling equipment including the image correcting apparatus and the abnormality detecting apparatus according to the embodiment will be described below with reference to FIG. 1. FIG. 1 is a schematic view illustrating a general makeup of the rolling equipment including the image correcting apparatus and the abnormality detecting apparatus according to the present embodiment.

The rolling equipment, denoted by 100 in FIG. 1, for rolling a metal strip 1 includes an F1 stand 10, an F2 stand 20, an F3 stand 30, an F4 stand 40, an F5 stand 50, cameras 61, 62, 63, 64, and 65, loopers 71, 72, 73, and 74 for tension control, an abnormality detecting apparatus 80, a control apparatus 85, a monitor 87, etc. The F1 stand 10, the F2 stand 20, the F3 stand 30, the F4 stand 40, the F5 stand 50, the cameras 61, 62, 63, 64, and 65, the abnormality detecting apparatus 80, and the control apparatus 85 are electrically interconnected by communication lines 90.

The rolling equipment 100 is not limited to the structure illustrated in FIG. 1 where there are five rolling stands, but may be of a structure including at least two or more stands. Furthermore, a method of correcting an image, a method of detecting an abnormality, an image correcting apparatus, and an abnormality detecting apparatus according to the present invention may not necessarily be applied to rolling equipment having two or more stands, but may be applied to a one-stand rolling mill.

Each of the F1 stand 10, the F2 stand 20, the F3 stand 30, the F4 stand 40, and the F5 stand 50 is of a four-high stand configuration including an upper work roll and a lower work roll and an upper backup roll and a lower backup roll that contact the upper work roll and the lower work roll, respectively, to support them. The F1 stand 10, the F2 stand 20, the F3 stand 30, the F4 stand 40, and the F5 stand 50 also include respective depression cylinders 11, 21, 31, 41, and 51 and respective load detectors 12, 22, 32, 42, and 52. Each of the F1 stand 10, the F2 stand 20, the F3 stand 30, the F4 stand 40, and the F5 stand 50 may alternatively be of a six-high stand configuration with intermediate rolls disposed between the work rolls and the backup rolls.

The looper 71 includes a roll for tension control that is disposed between the F1 stand 10 and the F2 stand 20. The looper 71 has its rotational axis extending transversely or widthwise across the metal strip 1 such that the metal strip 1 as it travels is placed on the looper 71. The looper 71 is located in such a position to lift and hold the metal strip 1.

The looper 71 may be loaded upwardly by a spring or the like, or may be raised by a hydraulic cylinder, an electric motor, or the like, for example.

The camera 61 is installed for capturing an image of the surface of the metal strip 1 as it has been rolled in the periphery of a position between the F1 stand 10 and the F2 stand 20, i.e., in the vicinity of the position where the tension control looper 71 is located. Data of an image captured by the camera 61 are transmitted through the communication lines 90 to the abnormality detecting apparatus 80.

Similarly, the looper 72 for tension control is disposed between the F2 stand 20 and the F3 stand 30, the looper 73 for tension control between the F3 stand 30 and the F4 stand 40, and the looper 74 for tension control between the F4 stand 40 and the F5 stand 50.

The camera 62 is installed in a position for capturing an image of the surface of the metal strip 1 in a peripheral area where the metal strip 1 has been raised vertically upwardly by the looper 72. The camera 63 is installed in a position for capturing an image of the surface of the metal strip 1 in a peripheral area where the metal strip 1 has been raised vertically upwardly by the looper 73. The camera 64 is installed in a position for capturing an image of the surface of the metal strip 1 in a peripheral area where the metal strip 1 has been raised vertically upwardly by the looper 74. The camera 65 is installed in a position downstream of the F5 stand 50 with respect to the rolling direction in the rolling equipment 100 for capturing an image of the surface of the metal strip 1. Data of images captured by the cameras 62, 63, 64, and 65 are transmitted through the communication lines 90 to the abnormality detecting apparatus 80.

The cameras 61, 62, 63, 64, and 65 are preferably installed widthwise outside of the metal strip 1 as it is viewed in plan. The cameras 61, 62, 63, 64, and 65 captures respective images at positions downstream of the F1 stand 10, the F2 stand 20, the F3 stand 30, the F4 stand 40, the F5 stand 50, respectively. If there is another rolling mill located downstream of the rolling equipment or mill 100, then it is desirable for the camera 65 to capture an image at a position intermediate between the two rolling mills, that is, at a position approximately the same position as the looper. If there is no rolling mill located downstream of the rolling equipment or mill 100, then it is desirable for the camera 65 to capture an image at a position immediately downstream of the final stand of the rolling equipment 100.

Image capturing areas where the cameras 61, 62, 63, and 64 mainly capture respective images of the metal strip 1 that has been lifted by the loopers 71, 72, 73, and 74, and an image capturing area where the camera 65 mainly captures an image downstream of the F5 stand 50 providing there is no looper downstream of the rolling equipment 100, may be combined with respective illuminating devices. These illuminating devices may be general illuminating lamps disposed on the ceiling of a rolling factory where the rolling equipment 100 is installed. Though no new illuminating units are required as the illuminating devices according to the present invention, dedicated lighting units such as rod-shaped light sources may be installed as the illuminating devices.

The abnormality detecting apparatus 80 includes an apparatus for performing various processes to determine whether the metal strip 1 has a strip shape abnormality or not on the basis of the images captured by the cameras 61, 62, 63, 64, and 65. The abnormality detecting apparatus 80 has an image correcting section 81, a threshold value calculating section 82, and an abnormality detecting section 83.

The image correcting section 81 acquires a plurality of images captured of the surface of the metal strip 1 in a steady state that has been rolled by the rolling equipment 100, under different illuminating conditions or image capturing conditions. The image correcting section 81 preferably acts as a main section configured to perform an acquiring step.

The image correcting section 81 includes an acquiring section 81a, a selecting section 81b, a determining section 81c, a calculating section 81d, and a correcting section 81e. The acquiring section 81a acquires a plurality of images. The images acquired by the acquiring section 81a may be adjusted such that the luminance difference between a luminance in a reference pixel point or a luminance in average in a reference pixel range in a first image to be described later, the luminance being hereinafter referred to as an R value, a G value, a B value, and an R value, a G value, a B value in reference pixel point or an R value, a G value, a B value in average in reference pixel range in other images than the first image, represents 51 or less.

The phrase "surface of the metal strip 1 a steady state" referred to above represents the surface of a portion of the metal strip 1 that is not the leading or trailing end of the metal strip 1, where the metal strip 1 is flat, but not bent in the rolling direction, while the metal strip 1 is being normally rolled.

The phrase "different illuminating conditions or image capturing conditions" referred to above represent one or more different conditions about the shapes, luminance values, illuminance values, color tones, and installed positions of the illuminating devices in the facility where the rolling equipment 100 is installed, or one or more different conditions about the installed positions, camera angles, aperture values, shutter speeds, ISO sensitivities, and digital settings for image capturing devices.

The phrase "acquires a plurality of images" referred to above may represent a mode of acquiring the images of the metal strip 1 that have been captured from a storage device, or a mode of acquiring image data captured by the cameras 61, 62, 63, 64, and 65 and input from the cameras 61, 62, 63, 64, and 65, or both of the above modes. The phrase should not be limited to any one or both of the modes.

The selecting section 81b selects a reference pixel point or a reference pixel range included in an image portion representing the metal strip 1 out of one of the images acquired by the acquiring section 81a, and preferably acts as a main section configured to perform a selecting step. The number of reference pixel points that make up the reference pixel range that has been selected is not limited to any number, but may range from several spots to several hundred spots.

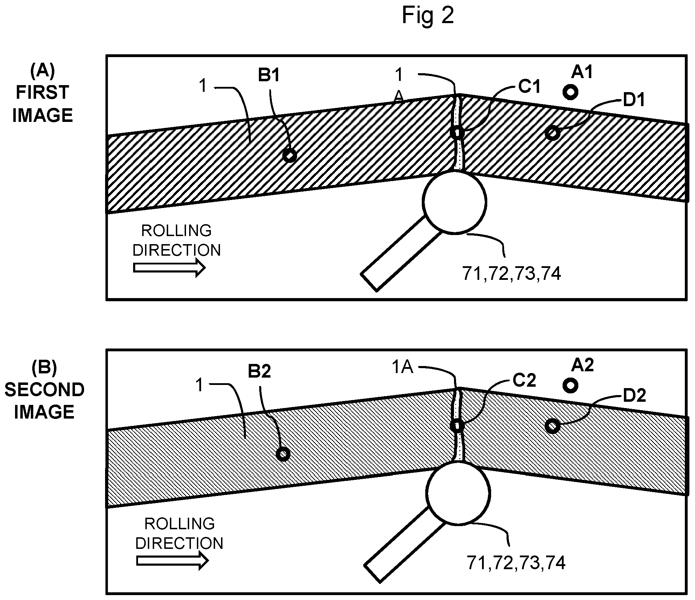

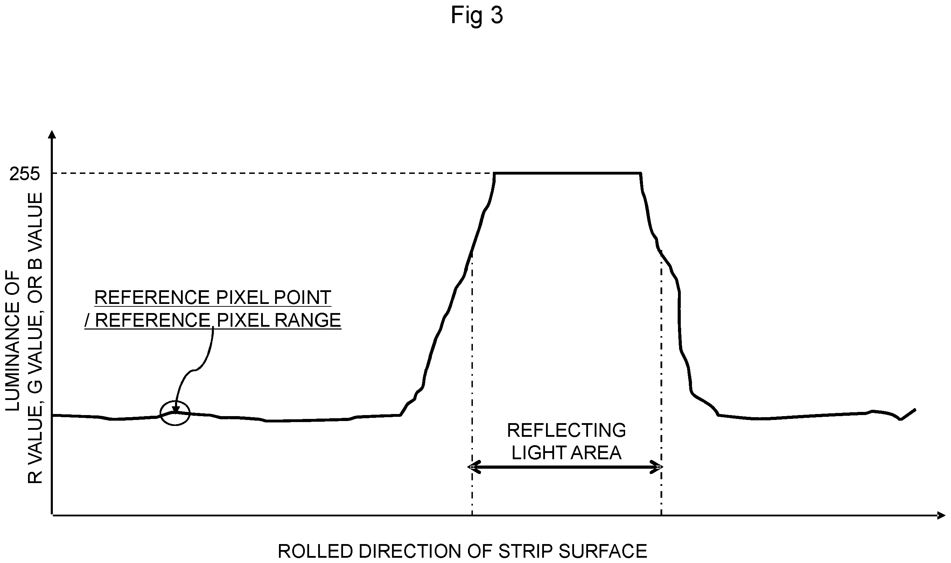

The selecting section 81b can select a reference pixel point or a reference pixel range from an image portion that represents the metal strip 1 but excludes a reflecting light area 1A (see FIGS. 2A and 2B). The reference pixel point or the reference pixel range that has been selected should desirably be an area of stable luminance where the difference between its own luminance and the luminance of a predetermined range in its periphery can be regarded as smaller than a predetermined value. For example, as illustrated in FIG. 3 to be described later, the reference pixel point or the reference pixel range should desirably be selected from an area regarded as spaced from the reflecting light area in an image portion representing the luminance distribution in the rolling direction of the surface of the metal strip 1.

To meet the above demand, the selecting section 81b performs image processing on an image including a lifted area of the metal strip 1 and specifies, as a reflecting light area, a range including boundaries of upstream and downstream, with respect to the rolling direction, of a location where the luminance of reflected light from the strip surface included in the image is larger than a particular luminance value.

The reflecting light area refers to an area where reflected light is stronger than other areas in the range including the metal strip 1, and appears mainly at locations where the metal strip 1 has been raised by the loopers 71, 72, 73, and 74. The cameras 61, 62, 63, 64, and 65 are positioned in order for the images captured thereby to include the reflecting light area.

For example, the selecting section 81b can specify the area where the luminance is 0.9 or more times the highest value of luminance of an R value, a G value, or a B value of the image of the metal strip 1 as the reflecting light area. Specifically, the selecting section 81b can specify the area where the luminance is 230 or higher as the reflecting light area when the highest value of luminance of an R value, a G value, or a B value is 255, and can specify the area where the luminance is 0.9 or more times the highest value of luminance as the reflecting light area when the highest value of luminance is lower than 255. However, the definition of the reflecting light area is not limited to the definition described above, but may be changed as required.

The determining section 81c determines a first image where the luminance of any one of the R value, the G value, and the B value in a reference pixel point or the luminance of any one the R value, the G value, and the B value in average in a reference pixel range is highest, from among the images acquired by the acquiring section 81a. The determining section 81c preferably acts as a main section configured to perform a determining step. The determining section 81c may use a reference pixel point or a reference pixel range having an average pixel point based on several to several hundred pixel points around a certain pixel point, though it is not particularly limited thereto.

The calculating section 81d calculates luminance differences between the R value, the G value, and the B value in the reference pixel point or the R value, the G value, and the B in average in the reference pixel range of the first image and the R value, the G value, and the B value in the reference pixel point or the R value, the G value, and the B in average in the reference pixel range of all images other than the first image. The calculating section 81d preferably acts as a main section configured to perform a calculating step.

The correcting section 81e adds or subtracts the absolute value of each of the luminance differences calculated by the calculating section 81d to or from corresponding one of the R value, the G value, and the B value at all the pixel points of all the other images so as to cause the R value, the G value, and the B value in the reference pixel point or the R value, the G value, and the B value in average in the reference pixel range of all the other images to match the R value, the G value, and the B value in the reference pixel point or the R value, the G value, and the B value in average in the reference pixel range of the first image. The correcting section 81e preferably acts as a main section configured to perform a correcting step.

The correcting section 81e can correct the luminance of any one the R value, the G value, and the B value after the luminance differences have been corrected when the luminance exceeds 255, such that the luminance of any one the R value, the G value, and the B value will be modified as 255.

The threshold value calculating section 82 determines various threshold values using the R value, the G value, and the B value of the first image with respect to the image corrected by the image correcting section 81. The threshold value calculating section 82 preferably acts as a main section configured to perform a threshold value calculating step. When a repeated rolling process is performed, providing the same first image is continuously used, the various threshold values do not need to be determined again, but may continuously remain the same in their use.

The abnormality detecting section 83 detects an abnormality on the surface of the metal strip 1 on the basis of the threshold values established by the threshold value calculating section 82 and the images captured by the cameras 61, 62, 63, 64, and 65 and having their luminance corrected by the image correcting section 81. The abnormality detecting section 83 preferably acts as a main section configured to perform an abnormality detecting section.

For example, the abnormality detecting section 83 according to the present embodiment groups luminance data of pixel points in the range of the metal strip 1 in the reflecting light area in the image into the R value, the G value, and the B value, subtracts a reference R value from the R value, a reference G value from the G value, and a reference B value from the B value, thereby determining luminance differences, and detects a rolling abnormality if both of two of the luminance differences become equal to or higher than the respective luminance difference threshold values.

It is desirable that the abnormality detecting section 83 perform an abnormality detecting process at the time where the rolling equipment 1 rolls the metal strip **1.**

It is desirable that the image correcting section 81 perform an image correcting process after the rolling equipment 100 has been serviced for maintenance or after the illuminating equipment has been serviced for maintenance, particularly after image capturing conditions about the installed positions, camera angles, exposure levels, exposure periods, white balance, and digital settings for image capturing devices, etc. of the cameras 61, 62, 63, 64, and 65 have been changed.

By contrast, it is desirable that the threshold value calculating section 82 perform a process of determining threshold values after the first image has been changed. If the same first image is continuously used, then the threshold value calculating section 82 does not need to perform its process of determining threshold values because the previously determined threshold values are used at the time where the rolling equipment 1 rolls the metal strip 1.

The control apparatus 85 controls operation of the devices in the rolling equipment 100. According to the present embodiment, the control apparatus 85 performs various control processes depending on the decision made about the shape of the metal strip 1 by the abnormality detecting section 83 of the abnormality detecting apparatus 80.

The abnormality detecting apparatus 80 and the control apparatus 85 may be implemented by a computer having the monitor 87 such as a liquid crystal display or the like, to be described later, an input device, a storage device, a CPU, memories, etc. The abnormality detecting apparatus 80 and the control apparatus 85 may be implemented by another computer as a single computer, though they are not particularly limited thereto.

The abnormality detecting apparatus 80 and the control apparatus 85 control operation of the various devices according to various programs stored in the storage device. Operation controlling processes that are performed by the abnormality detecting apparatus 80 and the control apparatus 85 may be described all together in a single program or described separately in a plurality of programs or described in a combination of such programs. The program or programs may partly or wholly be implemented by dedicated hardware or modularized.

The monitor 87 includes a display device such as a display or an acoustic device such as a warning machine. Since the monitor 87 is a device for informing the operator of a process of dealing with a problem such as a strip shape defect, a strip contraction, or the like that the abnormality detecting apparatus 80 has detected, a display is often used as the monitor 87.

The abnormality detecting apparatus 80 includes a display signal section that sends a signal representing contents to be displayed on the monitor 87 to the monitor 87.

The operator can confirm the state of the strip shape by visually observing the display screen of the monitor 87, the stands themselves, or the spaces between the stands while the rolling equipment 100 is in operation.

The control apparatus 85 may not be restricted to performing an automatic process of informing the operator of the occurrence of a strip shape defect and taking an action to improve the strip shape defect. The control apparatus 85 may perform only a process of displaying information on the monitor 87, or may not display information on the monitor 87 and may perform an automatic process of taking an action to improve the strip shape defect. These modes of operation of the control apparatus 85 are applicable to not only the occurrence of a strip shape defect, but also the occurrence of a strip contraction.

A specific example of the sequence of an image correcting process, i.e., a method of correcting an image, performed by the image correcting section 81 according to the present embodiment will be described below with reference to FIGS. 2A, 2B through 13.

FIGS. 2A and 2B schematically illustrate an example of images captured of the metal strip 1, indicating the difference between color tones of the images.

FIG. 2A schematically illustrates an image, i.e., a first image, actually captured of the metal strip 1. FIG. 2B schematically illustrates an image, i.e., a second image, captured of the original image by a camera under different image capturing conditions.

As illustrated in FIGS. 2A and 2B, although the first image and the second image represent the same subject, they have slightly different image lightness levels and color tones.

The results of a check on the luminance of pixel points making up actual images similar to those schematically illustrated in FIGS. 2A and 2B are indicated below. In the first image and the second image, A1 and A2, i.e., point A: positions outside of the metal strip 1 = background, B1 and B2, i.e., point B: positions on the surface of the metal strip 1 in the steady state, not belonging to the reflecting light area 1A, C1 and C2, i.e., point C: positions in the reflecting light area 1A on the metal strip 1, and D1 and D2, i.e., point D: positions on the surface of the metal strip 1 in the steady state, not belonging to the reflecting light area 1A represent the same places in the images. Inasmuch as the first image and the second image do not have the same color tones, the actual luminance values, i.e., an R value, a G value, and a B value, of both of the images have been inspected at each of the points.

The luminance values, i.e., the R value, the G value, and the B value, measured at each of the point A, i.e., A1, and A2, the point B, i.e., B1 and B2, the point C, i.e., C1 and C2, and the point D, i.e., D1 and d2, in the first image and the second image, the differences A1 - A2, B1 - B2, C1- C2, and D1 - D2 between the luminance values at the point A, the point B, the point C, and the point D in the first image and the second image, and average values thereof are set forth in Table 1 below.

**Table 1**

| | A1 | A2 | A1-A2 | B1 | B2 | B1-B2 | C1 | C2 | C1-C2 | | D1 | D2 | D1-D2 | |
|---|---|---|---|---|---|---|---|---|---|---|---|---|---|---|
| R value | 68 | 11 | 57 | 190 | 134 | 56 | 255 | 237 | 18 | | 185 | 119 | 66 | |
| G value | 65 | 16 | 49 | 145 | 102 | 43 | 254 | 249 | 5 | | 142 | 97 | 45 | |
| B value | 58 | 19 | 39 | 116 | 77 | 39 | 250 | 247 | 3 | | 125 | 74 | 51 | |
| Average | 64 | 15 | 49 | 150 | 104 | 46 | 253 | 244 | 9 | | 151 | 97 | 54 | |

It will be seen from Table 1 that except for the values at the positions within the reflecting light area 1A, i.e., the point C: C1 and C2, the R values, the G values, and the B values on the metal strip 1 and the R values, the G values, and the B values on the background, i.e., outside the metal strip 1, i.e., the luminance differences between the first image and the second image at the points A, B, and D, are close to each other.

Therefore, the R value, the G value, and the B value of all pixel points that make up an original image to be processed for abnormality detection are corrected in advance according to a correcting process, to be described below, for causing the color tone at a position, e.g., the point B2 or the point D2, on the surface of the metal strip 1 in the steady state in the second image to match the color tone at a position, e.g., the point B1 or the point D1, on the surface in the steady state of the metal strip 1 in the first image. Thereafter, an abnormality detecting process based on an image analysis is carried out. In this manner, the image analysis can be performed using the same threshold values at all times.

Luminance variations on the surface in the rolling direction of the metal strip 1 in an image are schematically illustrated in FIG. 3. FIG. 3 illustrates a luminance variation of the R value, the G value, or the B value in the rolling direction of an image captured of the surface of the metal strip 1 at a looper between rolling mill stands. At the looper, since the metal strip 1 is bent in the rolling direction, or a heightwise direction, there is a reflecting light area indicative of a higher luminance level than other areas. Furthermore, a reference pixel point or a reference pixel range, i.e., the point B or the point D illustrated in FIGS. 2A and 2B, is established in a position on the surface of the metal strip 1 in the steady state where the metal strip 1 is not bent in the rolling direction. In an image captured of the metal strip 1 at a position off a looper between rolling mill stands, i.e., downstream of the final rolling mill stand, for example, a position on the surface of the metal strip 1 in the steady state immediately downstream of the final rolling mill stand is established as a reference pixel point or a reference pixel range.

Since the highest value of luminance for the R value, the G value, and the B value is 255, the luminance value in the reflecting light area, i.e., the point C or an area in the periphery thereof, is liable to go up to and level off at 255 because the luminance is high in the reflecting light area no matter how images may be captured. Stated otherwise, the highest value of luminance in the reflecting light area is represented as the R value = 255, the G value = 255, and the B value = 255.

The correcting process referred to above is carried out on the luminance data shown in Table 1, for example, as follows:

The color tone of a position on the metal strip 1, i.e., the point B: B1 and B2, in any images is always corrected and fixed to the R, G, B values at B1, i.e., R = 190, G = 145, B = 116, in the first image.

In other words, the image is processed to cause the color tone at the position B2 on the metal strip 1 in the second image to match the color tone at the position B1 in the first image. In this case, the point B represents the position of a reference pixel point or the position of a reference pixel range.

Then, the luminance differences in the R value, the G value, and the B value at the position, i.e., the point B: B1 and B2, on the metal strip 1 between the two images, i.e., the first image and the second image, are checked. If it is determined that either one or all of the R value, the G value, and the B value of luminance of the first image are larger than either one or all of the R value, the G value, and the B value of luminance of the second image, then the absolute value of the luminance difference in the R value, the G value, or the B value that is determined to be larger is added to the corresponding one of the R value, the G value, and the B value of all the pixel points of the second image. If it is determined that either one or all of the R value, the G value, and the B value of luminance of the first image are smaller than either one or all of the R value, the G value, and the B value of luminance of the second image, then the absolute value of the luminance difference in the R value, the G value, or the B value that is determined to be smaller is subtracted from the corresponding one of the R value, the G value, and the B value of all the pixel points of the second image.

FIGS. 4A, 4B, 5A and 5B schematically illustrate an example of the correcting process of the luminance of the R value, the G value, or the B value in the rolling direction of images captured of the metal strip 1.

As illustrated in FIGS. 4A and 4B, for example, it is considered that the difference of luminance of each of the R value, the G value, and the B value in the reference pixel point or the R value, the G value, and the B value in average in the reference pixel range between the first image and the second image is of positive value, and the luminance exceeds the highest value of 255 in a second image corrected by adding the absolute values of the luminance differences referred to above to the second image. In this case, it is desirable that the value in excess of 255 in the corrected second image should be corrected into 255.

Moreover, as illustrated in FIGS. 5A and 5B, for example, there may be a case in which the difference of luminance in each of the R value, the G value, and the B value in the reference pixel point or the R value, the G value, and the B value in average in the reference pixel range between the first image and a third image is of negative value, and the R value, the G value, and the B value representing white in the reflecting light area are subtracted from 255 in a third image corrected by subtracting the absolute values of the luminance differences referred to above from the third image, with the result that the highest values of luminance in the reflecting light area are much lower than 255, as indicated by the corrected third image, for example. In this case, it may be possible that the reflecting light area cannot be determined properly.

As illustrated in FIGS. 5A and 5B, there is a possibility that the reflecting light area cannot be determined properly in the correcting process for the luminance in the reflecting light area because of the subtraction of the R value, the G value, and the B value of luminance of images. Consequently, it is desirable that an image where the luminance of the surface of the metal strip 1 in the steady state is relatively high should be determined as a first image in order that the difference of luminance of the R value, the G value, and the B value in the reference pixel point or the R value, the G value, and the B value in average in the reference pixel range will not be of negative value as much as possible.

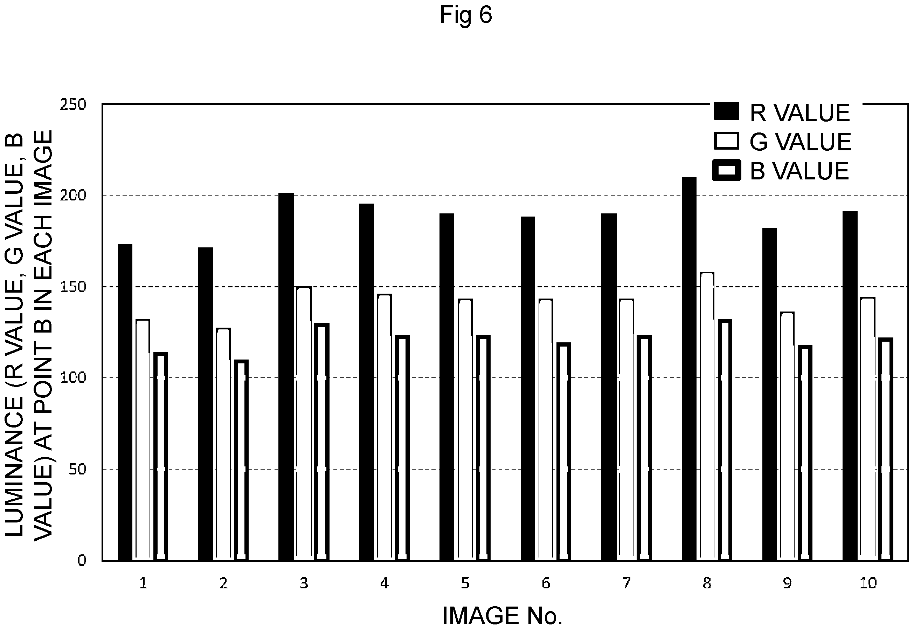

Specifically, if the metal strip 1 is a hot-rolled steel strip, then an image where the luminance of an R value in the color tone of the metal strip 1 among the luminance in the reference pixel point or the average luminance in the reference pixel range represents a highest value based on the past records should preferably be used as a first image. The R value representing a highest value based on the past records will be described in detail below with reference to FIGS. 6 through 8.

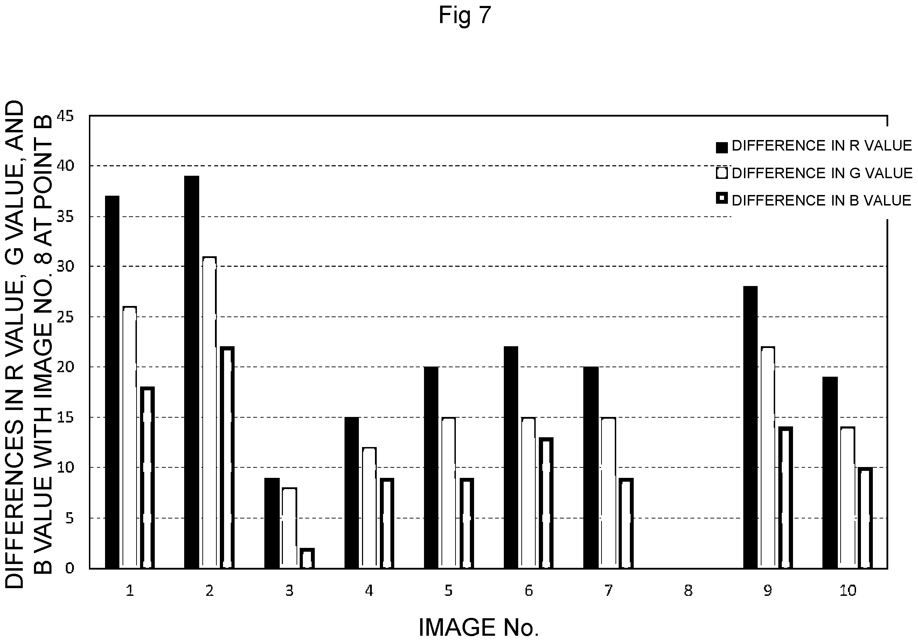

FIG. 6 illustrates the R value, the G value, and the B value in an area corresponding to the point B from randomly selected 10 cases of image data captured when the metal strip 1 has been actually rolled by the rolling equipment 100. FIG. 7 illustrates luminance differences between the R value, the G value, and the B value at the point B in an image No. 8 in FIG. 6 as a first image and the R value, the G value, and the B value at the point B in other images in FIG. 6.

Confirmation of the image data illustrated in FIG. 6 indicates that the R value of the image No. 8 is a highest value.

Providing the image No. 8 illustrated in FIG. 6 is used as a first image, the luminance at the point B represents an R value = 210. Since it is desirable that the luminance difference between the first image and the other images should not be too large, the luminance at the point B in a plurality of other images of the metal strip 1 acquired by the acquiring section 81a should preferably be selected from images whose R value range from 159 to 210.

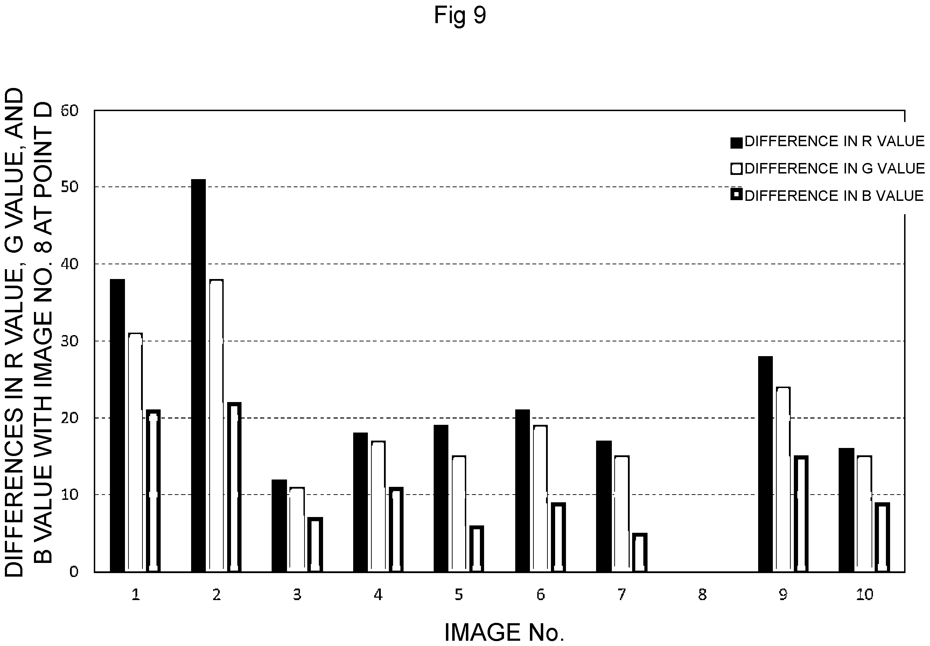

In other words, it is considered from the past records illustrated in FIG. 9 to be described later that the luminance difference between the R value of the other images and the R value of luminance in the reference pixel point or the average R value of luminance in the reference pixel range in the first image should preferably be 51 or less. If the luminance differences fall out of the range of the R value from 159 to 210, then it is preferable to adjust in advance the lightness of images such that the R value will fall in the range from 159 to 210 according to settings made for the cameras 61, 62, 63, 64, and 65 to capture images.

If the G value or the B value is larger than the R value, then the component whose luminance value is highest is used as a reference for selecting the first image. However, providing the rolling equipment 100 is designed for hot-rolling metal strips, the R value should desirably be used as a reference for selecting the first image because the color tone of the metal strip 1 basically has high R value.

According to the results illustrated in FIG. 6, the correcting process is carried out to determine the luminance differences between the R value, the G value, and the B value, as a reference, at the point B of the image No. 8 selected as the first image and the R value, the G value, and the B value at the point B in the other images, and the absolute value of each of the luminance differences is added to or subtracted from the luminance of all the pixel points of the other images so as to cause the R value, the G value, and the B value at the point B in the other images to match the R value, the G value, and the B value at the point B of the image No. 8, such that the color tone of the metal strip 1 at the point B in the other images will be the same as the color tone of the metal strip 1 at the point B in the image No. 8 at all times.

In this manner, the threshold value, i.e., parameter, of the image processing can be of the same value and do not need to be changed depending on images.

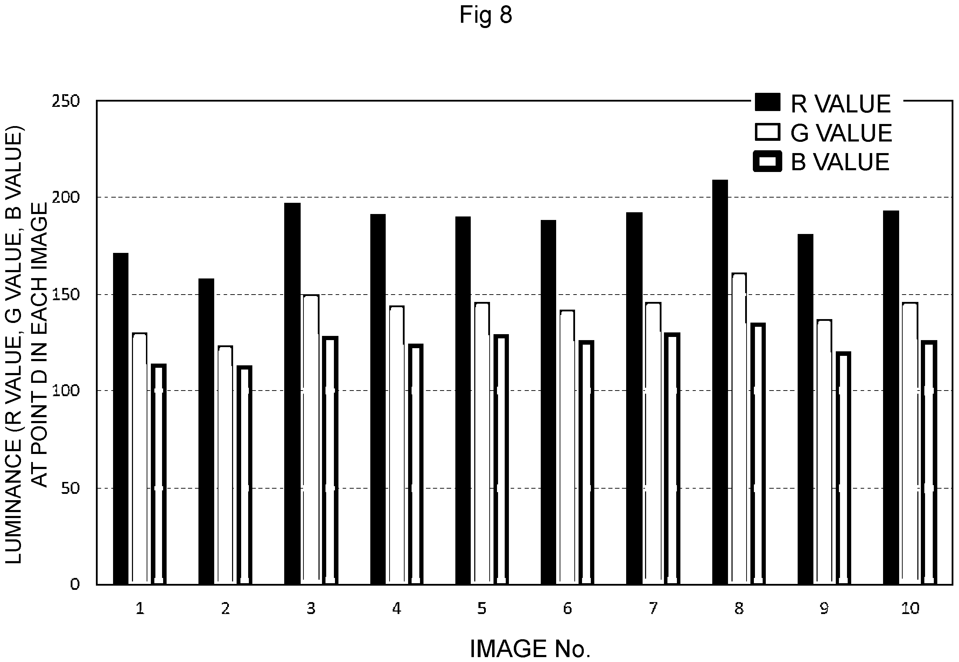

The point D has also been checked to see if the above process poses problems or not. FIG. 8 illustrates the R value, the G value, and the B value at the point D that have been checked using the same image data as described above. FIG. 9 illustrates the luminance differences between the R value, the G value, and the B value of the image No. 8 as the first image and the R value, the G value, and the B value at the point D in the other images.

As illustrated in FIG. 8, the R value of the image No. 8 is highest also at the point D and is essentially the same as the R value at the point B.

Furthermore, as illustrated in FIGS. 7 and 9, it has been checked how much difference is there between the point B and the point D about the luminance differences between the R value, the G value, and the B value of each of the randomly selected 10 images and the R value, the G value, and the B value of the image No. 8. As a consequence, it has been found that the luminance difference about the R value is 51 at highest at the point D (see FIG. 9) and the R value, the G value, and the B value of the color tone of the metal strip 1 in the image No. 8 are of approximately close values at both the point B and the point D. Therefore, it has been found that a reference pixel point or a reference pixel range may be selected from positions on the metal strip 1 outside of the reflecting light area, i.e., on the surface of the metal strip 1 in the steady state. Moreover, from the past records illustrated in FIG. 9, it is considered that the luminance difference between the R value in the other images and the R value of luminance in the reference pixel point or the average R value of luminance in the reference pixel range in the first image cause no problem if the luminance difference is 51 or less, and should preferably be 51 or less.

Accordingly, it has been found that when a position or a range on the surface of the metal strip 1 in the steady state selected as the first image is selected as a reference pixel point or a reference pixel range, and the luminance of pixel point in all images is corrected in order to secure the luminance in the reference pixel point or the reference pixel range in the other images to the same R value, G value, and B value at all times, using the R value, the G value, and the B value in the position or the range, the threshold value, i.e., the parameter, set for the image processing can be constant at all times and do not need to be changed.

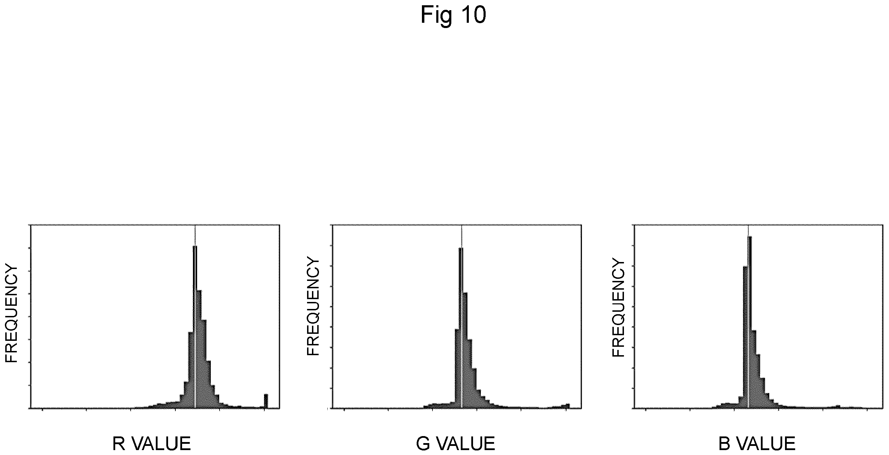

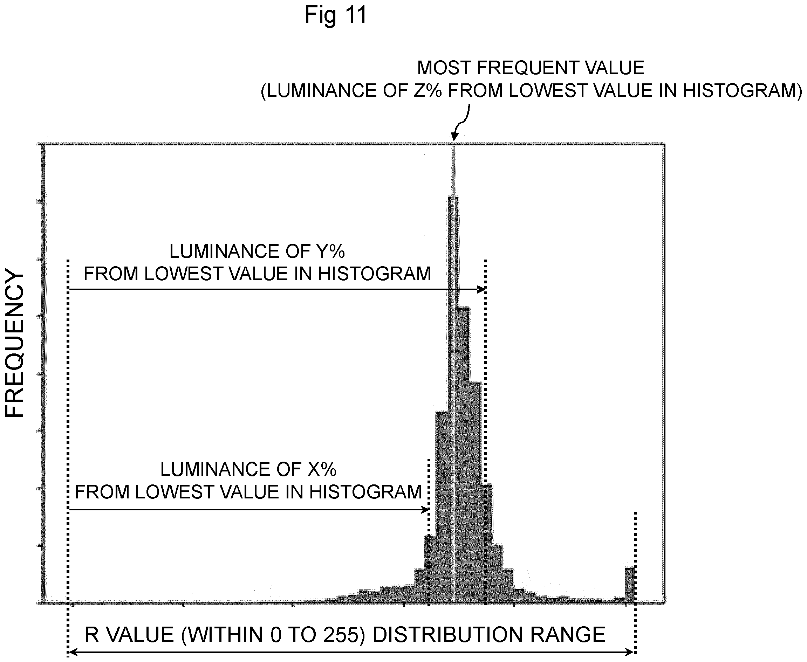

Next, an example of a process of determining a threshold value with the threshold value calculating section 82 will be described below with reference to FIGS. 10 through 13. FIG. 10 illustrates an example of histograms of luminance, i.e., the R value, the G value, and the B value, at pixel points in a strip range for one image. FIGS. 11 through 13 illustrate an example of a method of calculating a luminance reference value related to the threshold value, i.e., the parameter, set for image processing to decide that the metal strip has no abnormality.

The cameras 61, 62, 63, 64, and 65 capture images including the metal strip 1 preferably when the rolling equipment 100 is installed or when the rolling equipment 100 is serviced for maintenance or after the image capturing conditions for the cameras 61, 62, 63, 64, and 65 have been changed.

In the abnormality detecting apparatus 80, the threshold value calculating section 82 extracts the range of the metal strip 1 from a luminance area whose luminance is equal to or higher than a certain threshold value in order to separate the background and an area where the metal strip 1 exists from each other, according to a binarizing process performed on the image processed in the correcting process by the image processing section 81 and including the metal strip 1 as it is rolled.

Then, the threshold value calculating section 82 determines a luminance distribution of pixel points within the range of the metal strip 1 and calculates luminance reference values for deciding that the metal strip 1 is free of abnormalities such as a strip contraction or the like. Specifically, the threshold value calculating section 82 groups the luminance data into three components including the R value, the G value, and the B value, and determines three values including a reference R value, i.e., a R₀ value, a reference G value, i.e., a G₀ value, and a reference B value, i.e., a B₀ value, as the luminance reference values.

The threshold value calculating section 82 may determine two of the luminance reference values, i.e., a combination of any one an R₀value and a G₀ value, an R₀ value and a B₀ value, and a B₀ value and a G₀ value.

Specifically, the threshold value calculating section 82 determines frequency distributions, i.e., histograms, of luminance of the R values, the G values, and the B values represented by measured counts of the R values, the G values, and the B values of all pixels in the range extracted from each of the images captured by the cameras 61, 62, 63, 64, and 65. Each of the R value, the G value, and the B value is in the range from 0 to 255. FIG. 10 illustrates an example of histograms of luminance, i.e., the R value, the G value, and the B value, in a strip range in an image.

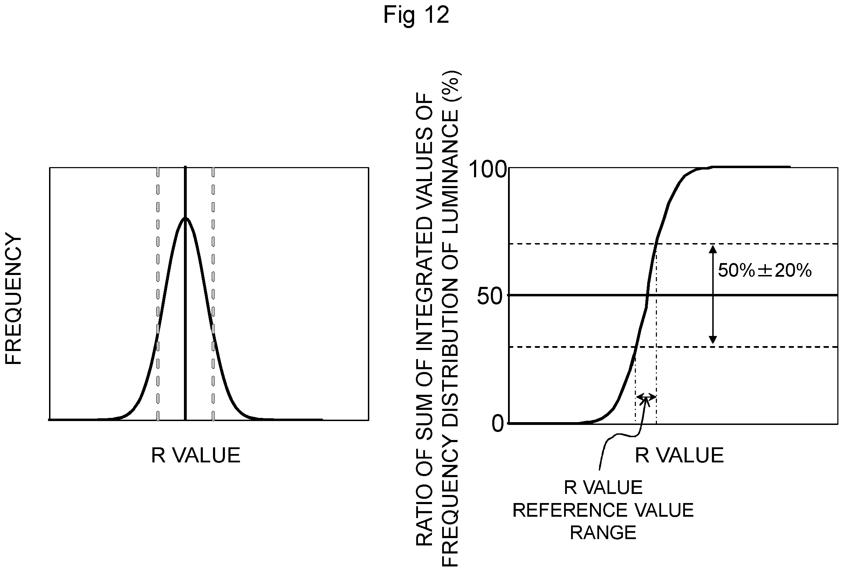

Then, with respect to the R value of the image, for example, the threshold value calculating section 82 produces a histogram of the luminance value about all the pixel points, and can determine the R value as the luminance reference value for deciding that the metal strip 1 is free of problems within a range from the luminance of X% to the luminance of Y% on a scale from the lowest R value in the histogram, and can also determine an R value as a luminance reference value for deciding that the metal strip 1 is free of problems at a most frequent value where the number of pixels of the same luminance is largest in the histogram. For example, as illustrated in FIG. 12, an R value that bisects an area represented by the integration of the frequency distribution of the R values, i.e., a ratio of 50% of the sum of integrated values of the frequency distribution of luminance, is used as a luminance reference value for deciding that the metal strip 1 is free of problems. Alternatively, the threshold value calculating section 82 may select an R value as a luminance reference value within an allowable range of ± 20% from 50% of the sum of integrated values of the frequency distribution of luminance. The allowable range does not need to be "± 20%," but may be modified as required. This process is also applicable to the G value and the B value.

The value used to determine a luminance reference value, i.e., the ratio of the sum of integrated values of the frequency distribution of luminance, may be a value designated by the operator before the metal strip 1 to be inspected to detect abnormalities is rolled, or may be a value preset in the abnormality detecting apparatus 80, or may be an optimum value learned by a machine learning process.

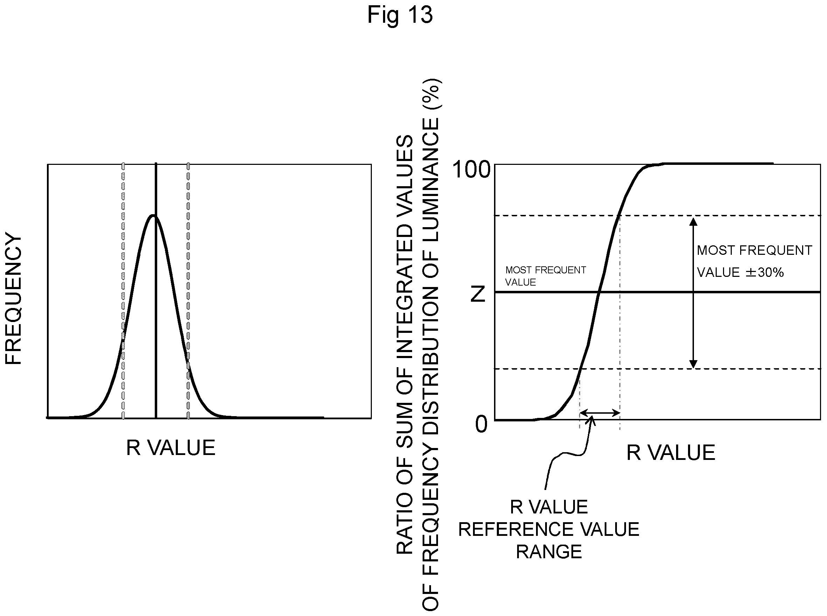

Instead of using a value that bisects an area represented by the integration of the frequency distribution of the R values, the threshold value calculating section 82 may use, as illustrated in FIG. 13, a luminance value representing the largest measured count in the frequency distribution of the R values, i.e., a most frequent value or a ratio of Z% of the sum of integrated values of the frequency distribution of luminance, as a luminance reference value for deciding that the metal strip 1 is free of problems. Furthermore, the threshold value calculating section 82 may select an R value as a luminance reference value within an allowable range of ± 30% from the most frequent value. The allowable range does not need to be "± 30%," but may be modified as required. This process is also applicable to the G value and the B value.

Advantages of the present embodiment will be described below.

The image correcting section 81 according to the present embodiment includes the acquiring section 81a for acquiring a plurality of images captured of the surface of the metal strip 1 in the steady state rolled by the rolling equipment 100 under different illuminating conditions or image capturing conditions, the selecting section 81b for selecting a reference pixel point or a reference pixel range included in an image portion representing the metal strip 1 from one of the images acquired by the acquiring section 81a, the determining section 81c for determining a first image where the luminance of any one the R value, the G value, and the B value in the reference pixel point or the luminance of any one the R value, the G value, and the B value in average in the reference pixel range is highest, from among the images acquired by the acquiring section 81a, the calculating section 81d for calculating the luminance differences between the R value, the G value, and the B value in the reference pixel point or the R value, the G value, and the B value in average in the reference pixel range of the first image and the R value, the G value, and the B value in the reference pixel point or the R value, the G value, and the B value in average in the reference pixel range of all images other than the first image, and the correcting section 81e for adding or subtracting the absolute value of the luminance difference to or from corresponding one of the R value, the G value, and the B value at all the pixel points of all the other images so as to cause the R value, the G value, and the B value in the reference pixel point or the R value, the G value, and the B value in average in the reference pixel range of all the other images to match the R value, the G value, and the B value in the reference pixel point or the R value, the G value, and the B value in average in the reference pixel range of the first image.

With the above arrangement, all of the images can be simulated as those captured under the same illuminating conditions or image capturing conditions. Therefore, since the same threshold values that are required in making decisions in image processing can be used with respect to images obtained under different illuminating conditions or image capturing conditions, it is not necessary to determine various threshold values again each time illuminating conditions or image capturing conditions are changed, with the result that the image processing can be performed quickly and stably.

Furthermore, in particular, the image of the metal strip 1 at the looper between the rolling mill stands includes a reflecting light area where the R value, the G value, and the B value are close to a highest value of 255 and that is almost white, and mostly fails to appropriately represent the actual color tone of the metal strip 1. In view of this difficulty, the selecting section 81b selects a reference pixel point or a reference pixel range from an image portion representing the metal strip 1 other than the reflecting light area, i.e., the positions on the surface of the metal strip 1 in the steady state, thereby making it possible to correct the color tones in the reference pixel points or the reference pixel ranges in all the other images into the same color tone. If there is another rolling mill located downstream of the rolling equipment or mill 100, a reference pixel point or a reference pixel range may be selected from positions immediately downstream of the final stand of the rolling mill, thereby making it possible to correct the color tones in the reference pixel points or the reference pixel ranges in all the other images into the same color tone.

Moreover, if the luminance differences between the R values in the reference pixel point or the reference pixel range exceed 51, then an area determined as the reflecting light area representing white tends to be widened due to the fact that all the R value, the G value, and the B value in the reflecting light area exceed 255 in the correcting process. The acquiring section 81a can prevent the accuracy with which to determine the reflecting light area from being lowered by adjusting the acquired images such that the luminance differences will be equal to or lower than 51.

Moreover, when the value of luminance among the R value, the G value, and the B value to which the absolute value of the luminance difference has been added or from which the absolute value of the luminance difference has been subtracted exceeds 255, the correcting section 81e corrects the value of luminance of the corresponding R value, G value, and B value into 255, so that the luminance value of the pixel can be placed in a normal numerical value range in view of a determinable numerical range from 0 to 255, making it possible to perform a more accurate correcting process.

Furthermore, the abnormality detecting apparatus 80 includes the image correcting section 81, the threshold value calculating section 82 for determining various threshold values using the R value, the G value, and the B value of the first image, and the abnormality detecting section 83 for detecting an abnormality of the surface of the metal strip 1 on the basis of the threshold values. The abnormality detecting apparatus 80 thus arranged can determine threshold values for the R value, the G value, and the B value indicating whether the image is acceptable or not with respect to the image obtained under the illuminating condition and the image capturing condition used for the first image, and can detect an abnormality of the surface of the metal strip 1 by applying the threshold values used for the first image to the image corrected in view of the illuminating condition and the image capturing condition. Consequently, the various thresholds do not need to be determined again, and the accuracy with which to detect an abnormality of the metal strip 1 is increased. As it is not necessary to determine threshold values many times, the burden placed on the operator while the rolling equipment 100 is in operation is reduced.

## Claims

1. A method of correcting an image by an image correcting apparatus (81), the method comprising:
an acquiring step of acquiring, by an acquiring section (81a) of the image correcting apparatus (81), a plurality of images each including in at least a portion thereof a surface of a metal strip (1) in a steady state, the metal strip (1) being rolled by a rolling mill, the images being captured under different illuminating conditions or image capturing conditions by a camera (61, 62, 63, 64, 65) disposed in a predetermined position;
a selecting step of selecting, by a selecting section (81b) of the image correcting apparatus (81), a reference pixel point or a reference pixel range from an image portion of each of the images that includes the metal strip (1) reflecting light area (1A) where reflected light is stronger than in other areas in the portion including the metal strip (1), from the images acquired in the acquiring step;
a determining step of determining, by a determining section (81c) of the image correcting apparatus (81), as a first image, an image including the reference pixel point or the reference pixel range where a luminance of any one of an R value, a G value, and a B value in average in the reference pixel point or the reference pixel range is highest, from among the images acquired in the acquiring step;
a calculating step of calculating, by a calculating section (81d) of the image correcting apparatus (81), luminance differences between (i) the R value, the G value, and the B value in the reference pixel point or the R value, the G value, and the B value in average in the reference pixel range in the first image and (ii) an R value, a G value, and a B value in a reference pixel point or an R value, a G value, and a B value in average in a reference pixel range in the same area as the reference pixel point or the reference pixel range in the first image, respectively, for all the images other than the first image; and
a correcting step of adding or subtracting, by a correcting section (81e) of the image correcting apparatus (81), an absolute value of each of the luminance differences to or from a corresponding one of the R value, the G value, and the B value at all pixel points of all the other images so as to cause the R value, the G value, and the B value in the reference pixel point or the R value, the G value, and the B value in average in the reference pixel range of all the other images to match the R value, the G value, and the B value in the reference pixel point or the R value, the G value, and the B value in average in the reference pixel range of the first image.

2. The method of correcting an image according to claim 1, wherein
the selecting step includes selecting the reference pixel point or the reference pixel range from an image portion including the metal strip (1) and other than a reflecting light area where the luminance is 0.9 or more times the highest value of luminance of an R value, a G value, or a B value of the image portion.

3. The method of correcting an image according to claim 1 or 2, wherein
the images acquired in the acquiring step are adjusted such that the luminance difference with the R value in the reference pixel point or the R value in average in the reference pixel range is equal to or less than 51.

4. The method of correcting an image according to any one of claims 1 through 3, wherein
the correcting step includes correcting any one of the R value, the G value, and the B value to or from which the absolute value of the luminance difference have been added or subtracted, into 255 if the one of the R value, the G value, and the B value exceeds 255.

5. A method of detecting an abnormality by an abnormality detecting apparatus (80), the method comprising:
the method of correcting an image according to any one of claims 1 through 4;
a step of determining, by a threshold value calculating section (82) of the abnormality detecting apparatus (80), a threshold value for detecting an abnormality when the metal strip (1) is rolled, using the first image; and
a step of detecting, by an abnormality detecting section (83) of the abnormality detecting apparatus (80), an abnormality on the surface of the metal strip (1) on a basis of the threshold value for detecting the abnormality in the images acquired in the acquiring step and corrected by the method of correcting an image according to any one of claims 1 through 4.

6. An image correcting apparatus (81) comprising:
an acquiring section (81a) configured to acquire a plurality of images each including in at least a portion thereof a surface of a metal strip (1) in a steady state, the metal strip (1) being rolled by a rolling mill, the images being captured under different illuminating conditions or image capturing conditions by a camera (61, 62, 63, 64, 65) disposed in a predetermined position;
a selecting section (81b) configured to select a reference pixel point or a reference pixel range from an image portion of each of the images that includes the metal strip (1) but excluding a reflecting light area (1A) where reflected light is stronger than in other areas in the portion including the metal strip (1), from the images acquired by the acquiring section (81a);
a determining section (81c) configured to determine, as a first image, an image including the reference pixel point or the reference pixel range where a luminance of any one of an R value, a G value, and a B value in average in the reference pixel point or the reference pixel range is highest, from among the images acquired by the acquiring section (81a);
a calculating section (81d) configured to calculate luminance differences between (i) the R value, the G value, and the B value in the reference pixel point or the R value, the G value, and the B value in average in the reference pixel range in the first image and (ii) an R value, a G value, and a B value in a reference pixel point or an R value, a G value, and a B value in average in a reference pixel range in the same area as the reference pixel point or the reference pixel range in the first image, respectively, for all the images other than the first image; and
a correcting section (81e) configured to add or subtract an absolute value of each of the luminance differences to or from corresponding one of the R value, the G value, and the B value at all pixel points of all the other images so as to cause the R value, the G value, and the B value in the reference pixel point or the R value, the G value, and the B value in average in the reference pixel range of all the other images to match the R value, the G value, and the B value in the reference pixel point or the R value, the G value, and the B value in average in the reference pixel range of the first image.

7. The image correcting apparatus (81) according to claim 6, wherein
the selecting section (81b) selects the reference pixel point or the reference pixel range from an image portion including the metal strip (1) and other than a reflecting light area where the luminance is 0.9 or more times the highest value of luminance of an R value, a G value, or a B value of the image portion.

8. The image correcting apparatus (81) according to claim 6 or 7, wherein
the images acquired by the acquiring section (81a) are adjusted such that the luminance difference with the R value in the reference pixel point or the R value in average in the reference pixel range is equal to or less than 51.

9. The image correcting apparatus (81) according to any one of claims 6 through 8, wherein
the correcting section (81e) corrects any one of the R value, the G value, and the B value to or from which the absolute value of the luminance difference has been added or subtracted, into 255 if the one of the R value, the G value, and the B value exceeds 255.

10. An abnormality detecting apparatus (80) comprising:
the image correcting apparatus (81) according to any one of claims 6 through 9;
a threshold value calculating section (82) configured to determine a threshold value for detecting an abnormality when the metal strip (1) is rolled, using the first image; and
an abnormality detecting section (83) configured to detect an abnormality on the surface of the metal strip (1) on a basis of the threshold value for detecting the abnormality in the images acquired by the acquiring section (81a) and corrected by the image correcting apparatus (81) according to any one of claims 6 through 9.

## Patentansprüche

1. Verfahren zum Korrigieren eines Bildes durch eine Bildkorrekturvorrichtung (81), wobei das Verfahren umfasst: einen Erfassungsschritt des Erfassens einer Vielzahl von Bildern durch einen Erfassungsabschnitt (81a) der Bildkorrekturvorrichtung (81), wobei jedes Bild in wenigstens einem Teil davon eine Oberfläche eines Metallstreifens (1) in einem stabilen Zustand enthält, wobei der Metallstreifen (1) durch ein Walzwerk gewalzt wird, wobei die Bilder unter verschiedenen Beleuchtungsbedingungen oder Bildaufnahmebedingungen durch eine Kamera (61, 62, 63, 64, 65) aufgenommen werden, die in einer vorbestimmten Position angeordnet ist;
einen Auswahlschritt zum Auswählen eines Referenzpixelpunkts oder eines Referenzpixelbereichs aus einem Bildabschnitt jedes der Bilder, die den Metallstreifen (1) enthalten, aber einen reflektierenden Lichtbereich (1A) ausschließen, in dem das reflektierte Licht stärker ist als in anderen Bereichen in dem Abschnitt, der den Metallstreifen (1) enthält, aus den im Erfassungsschritt erfassten Bildern durch einen Auswahlabschnitt (81b) der Bildkorrekturvorrichtung (81);
einen Bestimmungsschritt zum Bestimmen eines Bildes, das den Referenzpixelpunkt oder den Referenzpixelbereich enthält, in dem eine Luminanz eines R-Werts, eines G-Werts oder eines B-Werts im Durchschnitt in dem Referenzpixelpunkt oder dem Referenzpixelbereich am höchsten ist, aus den in dem Erfassungsschritt erfassten Bildern durch einen Bestimmungsabschnitt (81c) der Bildkorrekturvorrichtung (81) als ein erstes Bild;
einen Berechnungsschritt des Berechnens von Luminanzdifferenzen zwischen (i) dem R-Wert, dem G-Wert und dem B-Wert in dem Referenzpixelpunkt oder dem R-Wert, dem G-Wert und dem B-Wert im Durchschnitt in dem Referenzpixelbereich in dem ersten Bild und (ii) einem R-Wert, einem G-Wert und einem B-Wert in einem Referenzpixelpunkt oder einem R-Wert, einem G-Wert und einem B-Wert im Durchschnitt in einem Referenzpixelbereich in demselben Bereich wie der Referenzpixelpunkt oder der Referenzpixelbereich im ersten Bild für alle Bilder außer dem ersten Bild; und
einen Korrekturschritt des Addierens oder Subtrahierens eines Absolutwerts jeder der Luminanzdifferenzen zu oder von einem entsprechenden des R-Werts, des G-Werts und des B-Werts an allen Pixelpunkten aller anderen Bilder durch einen Korrekturabschnitt (81e) der Bildkorrekturvorrichtung (81), um zu bewirken, dass der R-Wert, der G-Wert und der B-Wert im Referenzpixelpunkt oder der R-Wert, der G-Wert und der B-Wert im Durchschnitt im Referenzpixelbereich aller anderen Bilder mit dem R-Wert, dem G-Wert und dem B-Wert im Referenzpixelpunkt oder dem R-Wert, dem G-Wert und dem B-Wert im Durchschnitt im Referenzpixelbereich des ersten Bildes übereinstimmen.

2. Verfahren zur Korrektur eines Bildes gemäß Anspruch 1, wobei
der Auswahlschritt das Auswählen des Referenzpixelpunkts oder des Referenzpixelbereichs aus einem Bildabschnitt umfasst, der den Metallstreifen (1) enthält und kein reflektierender Lichtbereich ist, in dem die Luminanz das 0,9-fache oder mehr des höchsten Luminanzwerts eines R-Werts, eines G-Werts oder eines B-Werts des Bildabschnitts beträgt.

3. Verfahren zur Korrektur eines Bildes gemäß Anspruch 1 oder 2, wobei
die in dem Erfassungsschritt erfassten Bilder so angepasst werden, dass die Luminanzdifferenz mit dem R-Wert in dem Referenzpixelpunkt oder dem R-Wert im Durchschnitt in dem Referenzpixelbereich gleich oder kleiner als 51 ist.

4. Verfahren zum Korrigieren eines Bildes gemäß einem der Ansprüche 1 bis 3, wobei
der Korrekturschritt das Korrigieren eines der Werte R, G und B, zu oder von dem der Absolutwert der Luminanzdifferenz addiert oder subtrahiert wurde, auf 255 umfasst, wenn der eine der Werte R, G und B 255 überschreitet.

5. Verfahren zum Erfassen einer Anomalie durch eine Anomalieerfassungsvorrichtung (80), wobei das Verfahren umfasst:
das Verfahren zum Korrigieren eines Bildes gemäß einem der Ansprüche 1 bis 4;
einen Schritt des Bestimmens eines Schwellenwerts zum Erfassen einer Anomalie durch einen Schwellenwertberechnungsabschnitt (82) der Anomalieerfassungsvorrichtung (80), wenn das Metallband (1) gewalzt wird, unter Verwendung des ersten Bildes; und
einen Schritt des Erfassens einer Anomalie auf der Oberfläche des Metallstreifens (1) durch einen Anomalieerfassungsabschnitt (83) der Anomalieerfassungsvorrichtung (80) auf der Grundlage des Schwellenwerts zum Erfassen der Anomalie in den Bildern, die im Erfassungsschritt erfasst und durch das Verfahren zum Korrigieren eines Bildes gemäß einem der Ansprüche 1 bis 4 korrigiert wurden.

6. Bildkorrekturvorrichtung (81), umfassend:
einen Erfassungsabschnitt (81a), der so konfiguriert ist, dass er eine Vielzahl von Bildern erfasst, die jeweils in mindestens einem Teil davon eine Oberfläche eines Metallstreifens (1) in einem stabilen Zustand enthalten, wobei der Metallstreifen (1) durch ein Walzwerk gewalzt wird und die Bilder unter verschiedenen Beleuchtungsbedingungen oder Bildaufnahmebedingungen durch eine Kamera (61, 62, 63, 64, 65) aufgenommen werden, die in einer vorbestimmten Position angeordnet ist;
einen Auswahlabschnitt (81b), der so konfiguriert ist, dass er einen Referenzpixelpunkt oder einen Referenzpixelbereich aus einem Bildabschnitt jedes der Bilder auswählt, der den Metallstreifen (1) enthält, aber einen reflektierenden Lichtbereich (1A) ausschließt, in dem das reflektierte Licht stärker ist als in anderen Bereichen in dem Abschnitt, der den Metallstreifen (1) enthält, aus den vom Erfassungsabschnitt (81a) erfassten Bildern;
einen Bestimmungsabschnitt (81c), der so konfiguriert ist, dass er aus den von dem Erfassungsabschnitt (81a) erfassten Bildern ein Bild als erstes Bild bestimmt, das den Referenzpixelpunkt oder den Referenzpixelbereich enthält, in dem eine Luminanz eines R-Werts, eines G-Werts und eines B-Werts im Durchschnitt in dem Referenzpixelpunkt oder dem Referenzpixelbereich am höchsten ist;
einen Berechnungsabschnitt (81d), der so konfiguriert ist, dass er Luminanzdifferenzen berechnet zwischen (i) dem R-Wert, dem G-Wert und dem B-Wert in dem Referenzpixelpunkt oder dem R-Wert, dem G-Wert und dem B-Wert im Durchschnitt in dem Referenzpixelbereich in dem ersten Bild und (ii) einem R-Wert , einen G-Wert und einen B-Wert in einem Referenzpixelpunkt oder einen R-Wert, einen G-Wert und einen B-Wert als Durchschnittswert in einem Referenzpixelbereich in demselben Bereich wie der Referenzpixelpunkt oder der Referenzpixelbereich im ersten Bild jeweils für alle Bilder außer dem ersten Bild; und
einen Korrekturabschnitt (81e), der so konfiguriert ist, dass er einen Absolutwert jeder der Luminanzdifferenzen zu einem entsprechenden Wert des R-Werts, des G-Werts und des B-Werts an allen Pixelpunkten aller anderen Bilder addiert oder von diesem subtrahiert, um zu bewirken, dass der R-Wert, der G-Wert und der B-Wert im oder der R-Wert, der G-Wert und der B-Wert im Durchschnitt im Referenzpixelbereich aller anderen Bilder mit dem R-Wert, dem G-Wert und dem B-Wert im Referenzpixelpunkt oder dem R-Wert, dem G-Wert und dem B-Wert im Durchschnitt im Referenzpixelbereich des ersten Bildes übereinstimmen.

7. Bildkorrekturvorrichtung (81) nach Anspruch 6, wobei
der Auswahlabschnitt (81b) den Referenzpixelpunkt oder den Referenzpixelbereich aus einem Bildabschnitt auswählt, der den Metallstreifen (1) enthält und kein reflektierender Lichtbereich ist, in dem die Luminanz das 0,9-fache oder mehr des höchsten Luminanzwerts eines R-Werts, G-Werts oder B-Werts des Bildabschnitts beträgt.

8. Bildkorrekturvorrichtung (81) gemäß Anspruch 6 oder 7, wobei
die durch den Erfassungsabschnitt (81a) erfassten Bilder so angepasst werden, dass die Luminanzdifferenz mit dem R-Wert in dem Referenzpixelpunkt oder dem R-Wert im Durchschnitt in dem Referenzpixelbereich gleich oder kleiner als 51 ist.

9. Bildkorrekturvorrichtung (81) gemäß einem der Ansprüche 6 bis 8, wobei
der Korrekturabschnitt (81e) den R-Wert, den G-Wert oder den B-Wert, zu dem oder von dem der Absolutwert der Luminanzdifferenz addiert oder subtrahiert wurde, auf 255 korrigiert, wenn der R-Wert, der G-Wert oder der B-Wert 255 überschreitet.

10. Anomalie-Erfassungsvorrichtung (80) mit:
der Bildkorrekturvorrichtung (81) gemäß einem der Ansprüche 6 bis 9;
einem Schwellenwert-Berechnungsabschnitt (82), der so konfiguriert ist, dass er einen Schwellenwert zum Erfassen einer Anomalie bestimmt, wenn das Metallband (1) gewalzt wird, unter Verwendung des ersten Bildes; und
einen Abschnitt (83) zur Erkennung von Anomalien, der so konfiguriert ist, dass er eine Anomalie auf der Oberfläche des Metallstreifens (1) auf der Grundlage des Schwellenwerts zur Erkennung der Anomalie in den Bildern erkennt, die von dem Erfassungsabschnitt (81a) erfasst und von der Bildkorrekturvorrichtung (81) gemäß einem der Ansprüche 6 bis 9 korrigiert wurden.

## Revendications

1. Procédé de correction d'une image par un appareil (81) de correction d'images, le procédé comprenant :
une étape d'acquisition pour acquérir, par une section (81a) d'acquisition de l'appareil (81) de correction d'images, une pluralité d'images incluant chacune dans au moins une partie de celles-ci une surface d'une bande métallique (1) dans un état stabilisé, la bande métallique (1) étant laminée par un laminoir, les images étant capturées sous différentes conditions d'éclairage ou conditions de capture d'images par une caméra (61, 62, 63, 64, 65) disposée en une position prédéterminée ;
une étape de sélection pour sélectionner, par une section (81b) de sélection de l'appareil (81) de correction d'images, un point de pixel de référence ou une plage de pixels de référence à partir d'une partie d'image de chacune des images qui inclut la bande métallique (1) mais excluant une zone (1A) de lumière de réflexion où une lumière réfléchie est plus forte que dans d'autres zones dans la partie incluant la bande métallique (1), parmi les images acquises à l'étape d'acquisition ;
une étape de détermination pour déterminer, par une section (81c) de détermination de l'appareil (81) de correction d'images, comme une première image, une image incluant le point de pixel de référence ou la plage de pixels de référence où une luminance de l'une quelconque parmi une valeur R, une valeur V, et une valeur B en moyenne dans le point de pixel de référence ou la plage de pixels de référence est la plus élevée, parmi les images acquises à l'étape d'acquisition ;
une étape de calcul pour calculer, par une section (81d) de calcul de l'appareil (81) de correction d'images, des différences de luminance entre (i) la valeur R, la valeur V, et la valeur B dans le point de pixel de référence ou la valeur R, la valeur V, et la valeur B en moyenne dans la plage de pixels de référence dans la première image et (ii) une valeur R, une valeur V, et une valeur B dans un point de pixel de référence ou une valeur R, une valeur V, et une valeur B en moyenne dans une plage de pixels de référence dans la même zone que le point de pixel de référence ou la plage de pixels de référence dans la première image, respectivement, pour toutes les images autres que la première image ; et
une étape de correction pour ajouter ou soustraire, par une section (81e) de correction de l'appareil (81) de correction d'images, une valeur absolue de chacune des différences de luminance à une ou d'une correspondante de la valeur R, la valeur V, et la valeur B à tous les points de pixels de toutes les autres images de façon à amener la valeur R, la valeur V, et la valeur B dans le point de pixel de référence ou la valeur R, la valeur V, et la valeur B en moyenne dans la plage de pixels de référence de toutes les autres images à correspondre à la valeur R, la valeur V, et la valeur B dans le point de pixel de référence ou la valeur R, la valeur V, et la valeur B en moyenne dans la plage de pixels de référence de la première image.

2. Procédé de correction d'une image selon la revendication 1, dans lequel
l'étape de sélection inclut la sélection du point de pixel de référence ou de la plage de pixels de référence à partir d'une partie d'image incluant la bande métallique (1) et autre qu'une zone de lumière de réflexion où la luminance est 0,9 fois ou plus la valeur de luminance la plus élevée d'une valeur R, une valeur V, ou une valeur B de la partie d'image.

3. Procédé de correction d'une image selon la revendication 1 ou 2, dans lequel
les images acquises à l'étape d'acquisition sont ajustées de telle façon que la différence de luminance avec la valeur R dans le point de pixel de référence ou la valeur R en moyenne dans la plage de pixels de référence est égale ou inférieure à 51.

4. Procédé de correction d'une image selon l'une quelconque des revendications 1 à 3, dans lequel
l'étape de correction inclut la correction de l'une quelconque parmi la valeur R, la valeur V, et la valeur B à ou de laquelle la valeur absolue de la différence de luminance a été ajoutée ou soustraite, en 255 si celle de la valeur R, la valeur V, et la valeur B excède 255.

5. Procédé de détection d'une anomalie par un appareil (80) de détection d'anomalies, le procédé comprenant :
le procédé de correction d'une image selon l'une quelconque des revendications 1 à 4 ;
une étape de détermination, par une section (82) de calcul de valeur de seuil de l'appareil (80) de détection d'anomalies, d'une valeur de seuil pour détecter une anomalie lorsque la bande métallique (1) est laminée, en utilisant la première image ; et
une étape de détection, par une section (83) de détection d'anomalies de l'appareil (80) de détection d'anomalies, d'une anomalie sur la surface de la bande métallique (1) sur une base de la valeur de seuil pour détecter l'anomalie dans les images acquises à l'étape d'acquisition et corrigées par le procédé de correction d'une image selon l'une quelconque des revendications 1 à 4.

6. Appareil (81) de correction d'images comprenant :
une section (81a) d'acquisition configurée pour acquérir une pluralité d'images incluant chacune dans au moins une partie de celles-ci une surface d'une bande métallique (1) dans un état stabilisé, la bande métallique (1) étant laminée par un laminoir, les images étant capturées sous différentes conditions d'éclairage ou conditions de capture d'images par une caméra (61, 62, 63, 64, 65) disposée en une position prédéterminée ;
une section (81b) de sélection configurée pour sélectionner un point de pixel de référence ou une plage de pixels de référence à partir d'une partie d'image de chacune des images qui inclut la bande métallique (1) mais excluant une zone (1A) de lumière de réflexion où une lumière réfléchie est plus forte que dans d'autres zones dans la partie incluant la bande métallique (1), parmi les images acquises par la section (81a) d'acquisition ;
une section (81c) de détermination configurée pour déterminer, comme une première image, une image incluant le point de pixel de référence ou la plage de pixels de référence où une luminance de l'une quelconque parmi une valeur R, une valeur V, et une valeur B en moyenne dans le point de pixel de référence ou la plage de pixels de référence est la plus élevée, parmi les images acquises par la section (81a) d'acquisition ;
une section (81d) de calcul configurée pour calculer des différences de luminance entre (i) la valeur R, la valeur V, et la valeur B dans le point de pixel de référence ou la valeur R, la valeur V, et la valeur B en moyenne dans la plage de pixels de référence dans la première image et (ii) une valeur R, une valeur V, et une valeur B dans un point de pixel de référence ou une valeur R, une valeur V, et une valeur B en moyenne dans une plage de pixels de référence dans la même zone que le point de pixel de référence ou la plage de pixels de référence dans la première image, respectivement, pour toutes les images autres que la première image ; et
une section (81e) de correction configurée pour ajouter ou soustraire une valeur absolue de chacune des différences de luminance à une ou d'une correspondante de la valeur R, la valeur V, et la valeur B à tous les points de pixels de toutes les autres images de façon à amener la valeur R, la valeur V, et la valeur B dans le point de pixel de référence ou la valeur R, la valeur V, et la valeur B en moyenne dans la plage de pixels de référence de toutes les autres images à correspondre à la valeur R, la valeur V, et la valeur B dans le point de pixel de référence ou la valeur R, la valeur V, et la valeur B en moyenne dans la plage de pixels de référence de la première image.

7. Appareil (81) de correction d'images selon la revendication 6, dans lequel
la section (81b) de sélection sélectionne le point de pixel de référence ou la plage de pixels de référence à partir d'une partie d'image incluant la bande métallique (1) et autre qu'une zone de lumière de réflexion où la luminance est 0,9 fois ou plus la valeur de luminance la plus élevée d'une valeur R, une valeur V, ou une valeur B de la partie d'image.

8. Appareil (81) de correction d'images selon la revendication 6 ou 7, dans lequel
les images acquises par la section (81a) d'acquisition sont ajustées de telle façon que la différence de luminance avec la valeur R dans le point de pixel de référence ou la valeur R en moyenne dans la plage de pixels de référence est égale ou inférieure à 51.

9. Appareil (81) de correction d'images selon l'une quelconque des revendications 6 à 8, dans lequel
la section (81e) de correction corrige l'une quelconque parmi la valeur R, la valeur V, et la valeur B à ou de laquelle la valeur absolue de la différence de luminance a été ajoutée ou soustraite, en 255 si celle de la valeur R, la valeur V, et la valeur B excède 255.

10. Appareil (80) de détection d'anomalies comprenant :
l'appareil (81) de correction d'images selon l'une quelconque des revendications 6 à 9 ;
une section (82) de calcul de valeur de seuil configurée pour déterminer une valeur de seuil pour détecter une anomalie lorsque la bande métallique (1) est laminée, en utilisant la première image ; et
une section (83) de détection d'anomalies configurée pour détecter une anomalie sur la surface de la bande métallique (1) sur une base de la valeur de seuil pour détecter l'anomalie dans les images acquises par la section (81a) d'acquisition et corrigées par l'appareil (81) de correction d'images selon l'une quelconque des revendications 6 à 9.
